Europäisches Patentamt

European Patent Office

Office européen des brevets

(11) Veröffentlichungsnummer: **0 223 059**
B1

(12) **EUROPÄISCHE PATENTSCHRIFT**

(51) Int. Cl.⁴: **B23K 9/32, B23K 9/02, B23K 9/16**

(45) Veröffentlichungstag der Patentschrift:
18.04.90

(21) Anmeldenummer: 86114153.9

(22) Anmeldetag: 13.10.86

(54) Verfahren und Einrichtung zum Spülen der Innenoberfläche eines Rohres im Bereich einer Schweissnaht.

(30) Priorität: 25.10.85 DE 3538089

(43) Veröffentlichungstag der Anmeldung:
27.05.87 Patentblatt 87/22

(45) Bekanntmachung des Hinweises auf die Patenterteilung:
18.04.90 Patentblatt 90/16

(84) Benannte Vertragsstaaten:
DE FR SE

(56) Entgegenhaltungen:
CH-A- 423 426
US-A- 2 061 671
US-A- 3 053 967
US-A- 4 218 604
US-A- 4 454 405

(73) Patentinhaber: Siemens Aktiengesellschaft,
Wittelsbacherplatz 2, D-8000 München 2(DE)

(72) Erfinder: Gügel, Siegfried, Dipl.-Ing. (FH), Lupinenweg 3,
D-8521 Möhrendorf(DE)
Erfinder: Böhm, Jürgen, Görlitzer Strasse 9,
D-8520 Erlangen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Spülen der Innenoberfläche eines Rohres während eines Schweißprozesses, durch den zwei Rohrteile durch eine Schweißnaht miteinander verbunden werden, wobei mit laminarer Strömung dem Rohr ein Spülgas zugeführt wird und wobei die laminare Strömung in eine turbulente Strömung an der entstehenden Schweißnaht übergeführt wird. Die Erfindung betrifft auch eine Einrichtung zum Spülen der Innenoberfläche eines Rohres an einer entstehenden Schweißnaht.

Technische Anlagen, wie beispielsweise Fertigungsstraßen für elektronische Informationsträger erfordern einen hohen Schutz vor Verunreinigungen, damit die Fehlerquote gering bleibt. Selbst sehr kleine Staubpartikel können dort zu Fertigungsfehlern führen. Um einen guten Schutz vor Verunreinigungen zu erzielen, wird die Anlage während der gesamten Fertigung mit einem sehr reinen Gas beaufschlagt. Dieses Gas kann z.B. Argon sein.

Für die Versorgung mit sehr reinem Gas werden austenitische Rohrleitungen verwendet, deren Innenoberflächen elektropoliert sind. Die Rohrleitungen sind aus einzelnen Rohrlängen, Bögen, T-Stücken und Armaturen aufgebaut, die miteinander verschweißt sind. Bei der Herstellung der Rohrleitungen können während des Schweißprozesses Verdampfungsrückstände in die Leitung und damit später in das Reingas gelangen. Um das zu verhindern, wird während des Schweißens die Schweißwurzel im Inneren des Rohres durch Spülen mit einem inerten Gas, z.B. mit Argon, vor Verzunderung geschützt. Die benötigten inerten Gase sind relativ teuer.

Bisher ist es üblich, ein Spülgas mit laminarer Strömung zuzuführen. Dabei wird jedoch die Strömungsgeschwindigkeit des Gases an der Schweißstelle durch die dort zugeführte Wärmemenge soweit reduziert, daß Rückstände mit einem wirtschaftlich vertretbaren Spülgasvolumen nicht mehr wegzuspülen sind, falls der Innendurchmesser des Rohres größer als ca. 50 mm ist. Folglich werden an der Rohrinnenwand unmittelbar neben der Schweißnaht Verdampfungsrückstände niedrig schmelzender Legierungskomponenten aus dem flüssigen Schmelzbad niedergeschlagen.

Ein Verfahren und eine Einrichtung zum Spülen der Innenoberfläche eines Rohres während eines Schweißprozesses, bei denen eine laminare Strömung eines Spülgases in eine turbulente Strömung umgewandelt wird, sind aus der US-A-4 454 405 zu entnehmen. Dabei ist eine Einspeisevorrichtung für Spülgas vorhanden, die durch Form und Anordnung von Öffnungen an ihrem Kopf, der sich im Rohr befindet, das Zustandekommen einer turbulenten Strömung im Rohr ermöglicht. Mit diesem Verfahren und der dazugehörigen Einrichtung wird das Spülgas im gesamten Rohrabschnitt, an dem eine Verschweißung vorzunehmen ist, verwirbelt. Dazu ist eine aufwendige Geometrie sowie Justierung der Einspeisevorrichtung erforderlich. Andererseits würde ausreichen, wenn nur an der entstehenden Schweißnaht eine turbulente Strömung vorhanden wäre.

Aus der US-A-4 218 604 ist ein Verfahren zum Schweißen eines Rohres bekannt, wobei ein Einsatz in das Innere des Rohres eingeführt wird, dessen Querschnitt an einer entstehenden Schweißnaht nur wenig kleiner als der innere Rohrquerschnitt ist. Daher bleibt zwischen dem Einsatz und der Rohrinnenwand nur ein enger Ringraum frei. Mit dem Einsatz wird bewirkt, daß ein Spülgas nur den engen Ringraum zur Verfügung hat und daher schneller an der entstehenden Schweißnaht vorbeiströmt, als es ohne Einsatz der Fall wäre. Dadurch wird die Kühlung der Schweißnaht verbessert. Eine turbulente Strömung des Spülgases wird nicht erzeugt.

Der Erfindung liegt die Aufgabe zugrunde, ein Verfahren und eine Einrichtung zum Spülen eines Rohres an einer entstehenden Schweißnaht anzugeben, die mit einfachen Mitteln und ohne aufwendige Justierung eine turbulente Gasströmung an der entstehenden Schweißnaht stets gewährleisten. Dabei sollen Verdampfungsrückstände abgeleitet werden und die Schweißwurzel der Schweißnaht soll im Inneren des Rohres vor Verzunderung geschützt sein.

Die erstgenannte Aufgabe wird gemäß der Erfindung dadurch gelöst, daß die turbulente Strömung im Rohr in Strömungsrichtung vor der Schweißnaht durch einen Strömungskörper erzeugt wird.

Damit wird der Vorteil erzielt, daß mit technisch einfachen Mitteln an einer Schweißnaht aus flüssigem Schweißgut austretende Verdampfungsrückstände aufgewirbelt und anschließend weggespült werden.

Die als zweite genannte Aufgabe, eine Einrichtung zum Spülen der Innenoberfläche des Rohres anzugeben, wird gemäß der Erfindung dadurch gelöst, daß im Rohr in Strömungsrichtung vor der entstehenden Schweißnaht ein Strömungskörper angeordnet ist und daß der Abstand zwischen der entstehenden Schweißnaht und dem Strömungskörper kleiner ist als die berechenbare Wirbellänge einer hinter dem Strömungskörper aus der laminaren Strömung des Spülgases gebildeten turbulenten Strömung des Spülgases.

Durch die Wahl des Abstandes zwischen der entstehenden Schweißnaht und der der Schweißnaht zugewandten Seite des Strömungskörpers ist sichergestellt, daß Verdampfungsrückstände von der entstehenden Schweißnaht ferngehalten und dort nicht niedergeschlagen werden. Eine Verzunderung der Schweißnaht wird dadurch verhindert.

Der Strömungskörper ist beispielsweise zylinderförmig und hat in Strömungsrichtung vorne eine aerodynamische Anströmform.

Nach einer ersten Ausführungsform ist er in das Rohr so eingepaßt, daß ein Ringspalt für das Spülgas frei bleibt. In Strömungsrichtung hinten weist er eine Abrißkante auf.

Mit einem derartig geformten Strömungskörper erzielt man den Vorteil, daß mit einer relativ geringen Spülgasmenge allein durch die Verwirbelung des Gases Rückstände restlos wegzuspülen sind.

Da nur wenig Spülgas, beispielsweise Argon, benötigt wird, ist das Spülen der Rohre bei Einsatz des Strömungskörpers wirtschaftlich.

In Strömungsrichtung gesehen sind am Ende des Strömungskörpers auf dessen Umfang Leitbleche parallel zur Rohrachse oder um einen Winkel zur Rohrachse gekippt angeordnet.

Durch den Einsatz eines mit Leitblechen ausgestatteten Strömungskörpers wird die Turbulenz in der Strömung des Spülgases vergrößert, so daß ein Niederschlag von Verdampfungsrückständen an einer Schweißstelle ausgeschlossen ist. Damit wird der Vorteil erzielt, daß das Rohr nach den Schweißarbeiten frei von Verunreinigungen ist.

Am Umfang des Strömungskörpers sind beispielsweise in bestimmtem Winkelabstand zueinander Rollen angeordnet, die den Strömungskörper fahrbar auf der Rohrinnenfläche abstützen. Dabei ist einer der Rollensätze federnd gelagert. Durch die Rollensätze, die gleichmäßig am Umfang verteilt sind, wird der Vorteil erzielt, daß der Strömungskörper leicht in das Rohr einführbar, dort zu verschieben und auch wieder aus dem Rohr zu entfernen ist. Dabei wird der Strömungskörper auf den Rollen mittels einer Stange von außen her bewegt. Außerdem werden durch die Lagerung auf Rollen beim Verschieben des Strömungskörpers Beschädigungen der polierten Innenoberfläche des Rohres vermieden. Dadurch, daß einer der Rollensätze federnd gelagert ist, ist eine exakte Zentrierung im Rohr gewährleistet. Die Anpreßkraft des gefederten Rollenpaares vermeidet ein Verrutschen des Körpers während des Schweißprozesses, so daß der Strömungskörper an der optimalen Position bleibt.

Eine andere Ausführungsform des Strömungskörpers sieht vor, daß sein Durchmesser dem Rohrinnendurchmesser entspricht und daß auf der Zylinderoberfläche des Strömungskörpers sich eine Rille nach Art eines Schraubengewindes befindet, durch die das Spülgas geführt wird. Dadurch wird eine ausreichende Verwirbelung des Spülgases auch ohne Einsatz von Leitblechen erreicht. Mit dieser Bauform wird der Vorteil erzielt, daß man mit einer relativ kurzen Baulänge auskommt, was den Einsatz des Strömungskörpers in schlecht zugänglichen Rohrabschnitten beispielsweise auch an Bögen und T-Stücken ermöglicht. Außerdem fallen für die unkomplizierte Form geringe Fertigungskosten an. Die Rille hat beispielsweise einen trapezförmigen Querschnitt.

Zur Positionierung eines Strömungskörpers nach der zweiten geschilderten Ausführungsform sind an dessen Umfang magnetisierbare Teile, beispielsweise Eisenteile angeordnet, die mit außerhalb des Rohres anbringbaren Haltemagneten wechselwirken. Die Eisenteile sind dabei im Strömungskörper nahe seiner Oberfläche versenkt angeordnet, damit mechanische Beschädigungen der Rohrinnenoberfläche ausgeschlossen werden. Statt der Eisenteile sind in den Strömungskörper Magnete einsetzbar, wobei ungleichnamige Pole der Haltemagnete außerhalb des Rohres und der Magnete im Strömungskörper gegenüberliegen.

Mit einer magnetischen Arretierung für den Strömungskörper wird der Vorteil erzielt, daß die Arretierung kurzfristig ein- oder auszuschalten ist. Während ein Strömungskörper mit der ersten Ausführungsform wegen der Rollreibung nur über eine mechanische Verbindung im Rohr zu bewegen ist, genügt bei der zweiten Ausführungsform, nachdem der Haltemagnet ausgeschaltet oder entfernt ist, ein leichtes Erhöhen des Spülgasdruckes, um den Strömungskörper im Rohr zu bewegen.

Der Strömungskörper nach der zweiten Ausführungsform ist noch einfacher und kostengünstiger zu erstellen und darüber hinaus em Rohr leichter handhabbar als der Strömungskörper nach der ersten Ausführungsform.

Ein geeignetes Material zur Fertigung eines Strömungskörpers ist ein harter, widerstandsfähiger Kunststoff. Ein solcher Kunststoff ist leicht zu verarbeiten und seine Oberflächenstruktur word selbst bei mechanischer Beanspruchung nicht verändert. Um das Gewicht des Strömungskörpers kleinzuhalten, ist er beispielsweise als Hohlkörper ausgebildet. Dabei sind die Wände des Hohlkörpers so dick, daß in ihnen die Eisenteile versenkbar sind.

Mit der Erfindung wird der Vorteil erzielt, daß beim Schweißen von Rohren, die später sehr reine Gase befördern sollen, hochwertige von Verdampfungsrückständen freie Schweißnähte gewährleistet sind. Eine gezielt an der Schweißstelle erzeugte turbulente Spülgasströmung verhindert dort Ablagerungen aus Verdampfungsrückenständen des Schmelzbades.

Die Erfindung wird anhand der Zeichnung näher erläutert:

Fig. 1 zeigt ein Rohr mit einer Schweißnaht, in dem eine Einrichtung mit einer ersten Ausführungsform zum Spülen der Rohrinnenoberfläche angeordnet ist.

Fig. 2 zeigt ein Rohr mit einer Schweißnaht, in dem eine Einrichtung mit einer zweiten Ausführungsform zum Spülen der Rohrinnenoberfläche angeordnet ist.

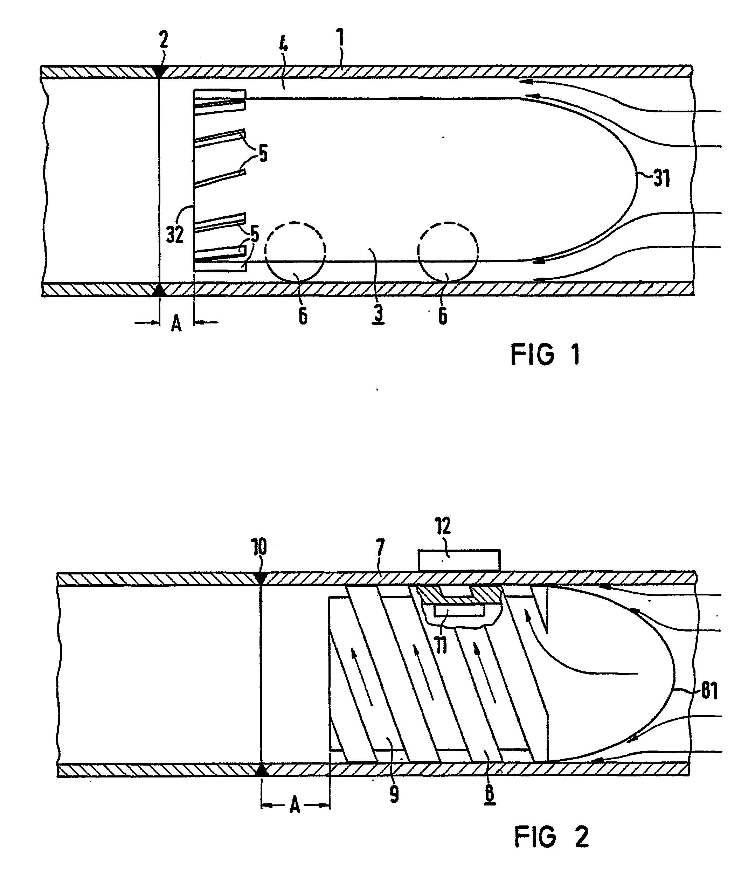

Einem Rohr 1 nach Fig. 1 wird mit laminarer Strömung ein Spülgas zugeführt. In Strömungsrichtung ist in einem festen Abstand A vor einer Schweißnaht 2, die zwei Rohrteile zusammenhalten soll, ein Strömungskörper 3 im Rohr angeordnet. Der Durchmesser des Strömungskörpers 3 ist geringfügig kleiner als der Innendurchmesser des Rohres 1. Dadurch bleibt ein Ringspalt 4 offen. Der Strömungskörper 3 hat in Strömungsrichtung vorne eine aerodynamische Anströmform 31, ist in der Mitte zylinderförmig und weist in Strömungsrichtung hinten eine Abrißkante 32 auf. Im Bereich der Abrißkante 32 sind auf der Mantelfläche des Strömungskörpers 3 Leitbleche 5 gegen die Rohrachse um einen Winkel gekippt angeordnet. Mit dem Strömungskörper 3 wird die laminare Strömung des Spülgases in eine turbulente Strömung übergeführt, die an der Schweißnaht 2 Verdampfungsrückstände und Ablagerungen aufwirbelt. Die Verunreinigungen werden dann mit dem Spülgasstrom weggespült. Die bei einem Einsatz des Strömungskörpers 3 gefertigte Schweißverbindung entspricht den Anforderungen, die für Reingasleitungen gestellt sind.

Zum Abstützen des Strömungskörpers 3 auf der Rohrinnenfläche sind am Umfang des Strömungskörpers 3 gleichmäßig verteilt drei Rollensätze 6 aus Kunststoff angeordnet, von denen nur ein Rollensatz 6 dargestellt ist. Damit eine exakte Zentrierung und Positionierung des Strömungskörpers 3 im Rohr 2 gewährleistet ist und darüber hinaus Beschädigungen der bei Reingasrohren polierten Innenoberfläche vermieden werden, ist ein Rollensatz 6 federnd gelagert. Der Strömungskörper 3 wird durch Reibungskräfte im Rohr gehalten und wird mit Hilfe einer Stange in das Rohr eingeführt und auch aus dem Rohr entfernt.

In einem Rohr 7 nach Fig. 2 ist ein Strömungskörper 8 im festen Abstand A vor einer Schweißnaht 10 angeordnet, der eine aerodynamische Anströmform 81 hat. Zur Überführung einer laminaren Strömung in eine turbulente Strömung weist er einige vom Strömungskörper 3 nach Fig. 1 abweichende Merkmale auf. Der Durchmesser des zylinderförmigen Strömungskörpers 8 nach Fig. 2 entspricht dem Innendurchmesser des Rohres 7. Auf der Zylinderoberfläche des Störmunskörpers 8 ist nach Art eines Schraubengewindes eine Rille 9 eingefräst. Durch diese Rille wird das Spülgas geführt. Dadurch entsteht in Strömungsrichtung hinter dem Strömungskörper 8 ein Gaswirbel, der Ablagerungen im Bereich der Schweißnaht 10 verhindert. Am Umfang des Strömungskörpers 8 verteilt sind in ihm versenkt Eisenteile 11 angeordnet. Diese Eisenteile 11 wirken mit Topfmagneten 12 zusammen, die an der Außenwand des Rohres 7 positionierbar sind. Auf diese Weise wird der Strömungskörper 8 an einer bestimmten Stelle im Rohr 7 positioniert und gehalten. Bei ausgeschalteten oder entfernten Haltermagneten 12 ist der Strömungskörper 8 durch Erzeugen eines geringen Druckunterschiedes im Rohr 7 zu bewegen. Dabei gleitet die relativ glatte Oberfläche des Strömungskörpers 8 mit geringer Reibung auf der polierten Innenoberfläche des Rohres 7.

Der Strömungskörper 3, 8 ist nur während des Schweißprozesses im Rohr 1, 7 angeordnet. Nachdem eine von Verdampfungsrückständen freie Schweißnaht 2, 10 erstellt worden ist, wird der Strömungskörper 3, 8 zur nächsten Schweißstelle gebracht oder aus dem Rohr 1, 7 entfernt.

**Patentansprüche**

1. Verfahren zum Spülen der Innenoberfläche eines Rohres (1, 7) während eines Schweißprozesses, durch den zwei Rohrteile durch eine Schweißnaht (2, 10) miteinander verbunden werden, wobei mit laminarer Strömung dem Rohr (1, 7) ein Spülgas zugeführt wird und wobei die laminare Strömung in eine turbulente Strömung an der entstehenden Schweißnaht übergeführt wird, dadurch gekennzeichnet, daß die turbulente Strömung im Rohr (1, 7) in Strömungsrichtung vor der Schweißnaht (2, 10) durch einen Strömungskörper (3, 8) erzeugt wird.

2. Einrichtung zum Spülen der Innenoberfläche eines Rohres (1, 7) an einer entstehenden Schweißnaht (2, 10), wobei dem Rohr (1, 7) ein Spülgas mit laminarer Strömung zuführbar ist, dadurch gekennzeichnet, daß im Rohr (1, 7) in Strömungsrichtung vor der entstehenden Schweißnaht (2, 10) ein Strömungskörper (3, 8) angeordnet ist und daß der Abstand (A) zwischen der entstehenden Schweißnaht (2, 10) und dem Strömungskörper (3, 8) kleiner ist als die berechenbare Wirbellänge einer hinter dem Strömungskörper (3, 8) aus der laminaren Strömung des Spülgases gebildeten turbulenten Strömung des Spülgases.

3. Einrichtung nach Anspruch 2, dadurch gekennzeichnet, daß der Strömungskörpre (3,8) zylinderförmig ist und daß der Strömungskörper (3,8) in Strömungsrichtung vorne eine aerodynamische Anströmform (31,81) hat.

4. Einrichtung nach den Ansprüchen 2 und 3, dadurch gekennzeichnet, daß der Durchmesser des Strömungskörpers (3) geringfügig kleiner ist als der Innendurchmesser des Rohres (1), so daß ein Ringspalt (4) offen bleibt und daß der Strömungskörper (3) in Strömungsrichtung hinten eine Abrißkante (32) aufweist.

5. Einrichtung nach Anspruch 4, dadurch gekennzeichnet, daß in Strömungsrichtung am Ende des Strömungskörpers (3) auf dessen Mantelfläche Leitbleche (5) angeordnet sind.

6. Einrichtung nach Anspruch 5, dadurch gekennzeichnet, daß die Leitbleche (5) parallel zur Rohrachse angeordnet sind.

7. Einrichtung nach Anspruch 5, dadurch gekennzeichnet, daß die Leitbleche (5) gegen die Rohrachse um einen Winkel gekippt angeordnet sind.

8. Einrichtung nach Anspruch 4, dadurch gekennzeichnet, daß am Umfang des Strömungskörpers (3) Rollen (6) angeordnet sind, die den Strömungskörper (3) fahrbar auf der Rohrinnenoberfläche abstützen.

9. Einrichtung nach Anspruch 8, dadurch gekennzeichnet, daß ein Rollensatz federnd gelagert ist.

10. Einrichtung nach den Ansprüchen 2 und 3, dadurch gekennzeichnet, daß der Durchmesser des Strömungskörpers (8) dem Innendurchmesser des Rohres (7) entspricht und daß auf der Zylinderoberfläche des Strömungskörpers (8) zur Leitung des Spülgases sich eine Rille (9) nach Art eines Schraubengewindes befindet.

11. Einrichtung nach Anspruch 10, dadurch gekennzeichnet, daß die Rille (9) einen trapezförmigen Querschnitt hat.

12. Einrichtung nach Anspruch 10, dadurch gekennzeichnet, daß am Zylindermantel des Strömungskörpers (8) Eisenteile (11) angeordnet sind, die mit außerhalb des Rohres (7) anbringbaren Haltemagneten (12) wechselwirken.

13. Einrichtung nach Anspruch 12, dadurch gekennzeichnet, daß die Eisenteile (11) im Strömungskörper (8) versenkt im Bereich seiner Oberfläche angeordnet sind

14. Einrichtung nach Anspruch 2, dadurch gekennzeichnet, daß der Strömungskörper (3,8) aus Kunststoff besteht.

**Claims**

1. A method for flushing the inner surface of a pipe (1, 7) during a welding process, through which two pipe parts are connected to each other by a welded seam (2, 10), wherein, with a laminar flow, a cleansing gas is supplied to the pipe (1, 7), and wherein the laminar flow is converted into a turbulent flow on the resulting welded seam, characterised in that the turbulent flow in the pipe (1, 7) in the direction of flow in front of the welded seam (2, 10) is produced by a flow body (3, 8).

2. A device for flushing the inner surface of a pipe (1, 7) on a resulting welded seam (2, 10), wherein a cleansing gas, with laminar flow, is supplied to the pipe (1, 7), characterised in that arranged in the pipe (1, 7) in the direction of flow, in front of the resulting welded seam (2, 10), there is a flow body (3, 8) and in that the distance (A) between the resulting welded seam (2, 10) and the flow body (3, 8) is smaller than the calculable eddy length of a turbulent flow of the cleansing gas formed behind the flow body (3, 8) from the laminar flow of the cleansing gas.

3. A device according to claim 2, characterised in that the flow body (3, 8) is cylindrical, and in that the flow body (3, 8) has, in the front, in the direction of flow an aerodynamic approach flow form (31, 81).

4. A device according to claims 2 and 3, characterised in that the diameter of the flow body (3) is slightly smaller than the inner diameter of the pipe (1), so that an annular clearance (4) remains open and so that the flow body (3) has a breaking edge (32) at the rear in the direction of flow.

5. A device according to claim 4, characterised in that arranged in the direction of flow, at the end of the flow body (3) on the lateral surface thereof there are guide plates (5).

6. A device according to claim 5, characterised in that the guide plates (5) are arranged parallel to the pipe axis.

7. A device according to claim 5, characterised in that the guide plates (5) are arranged titled at an angle relative to the pipe axis.

8. A device according to claim 4 characterised in that arranged on the periphery of the flow body (3) rollers (6) are arranged, which support the flow body (3) in a mobile manner on the pipe's inner surface.

9. A device according to claim 8, characterised in that a set of rollers is resiliently mounted.

10. A device according to claims 2 and 3, characterised in that the diameter of the flow body (8) corresponds with the inner diameter of the pipe (7) and in that located on the cylinder surface of the flow body (8), for conducting the cleansing gas, there is a groove (9) like) like a screw thread.

11. A device according to claim 10, characterised in that the groove (9) has a trapezoidal cross-section.

12. A device according to claim 10, characterised in that arranged on the cylinder jacket of the flow body (8) there are iron parts (11), which reciprocate with holding magnets (12), attachable on the outside the pipe (7).

13. A device according to claim 12, characterised in that the iron parts (11), sunk in the flow body (8), are arranged in the region of its surface.

14. A device according to claim 2, characterised in that the flow body (3, 8) consists of plastics.

## Revendications

1. Procédé de balayage de la surface intérieure d'un tuyau (1, 7) pendant un processus de soudage par lequel deux parties de tuyaux sont reliées l'une à l'autre par un cordon de soudure (2, 10), un gaz de balayage à écoulement laminaire étant envoyé au tuyau (1, 7) et l'écoulement laminaire étant transformé en un écoulement turbulent sur le cordon de soudure en formation, caractérisé en ce qu'il consiste à produire l'écoulement turbulent dans le tuyau (1, 7) par un corps de modification de l'écoulement (3, 8) en amont, dans le sens de l'écoulement, du cordon de soudure (2, 10).

2. Dispositif de balayage de la surface intérieure d'un tuyau (1, 7) sur un cordon de soudure (2, 10) en formation, un gaz de balayage à écoulement laminaire pouvant être amené au tuyau (1, 7), caractérisé en ce qu'un corps de modification de l'écoulement (3, 8) est disposé dans le tuyau (1, 7) en amont, dans le sens de l'écoulement, du cordon de soudure (2, 10) en formation et en ce que la distance (A) entre le cordon de soudure (2, 10) en formation et le corps de modification de l'écoulement (3, 8) est inférieure à la longueur de tourbillonnement, qui peut être calculée, d'un courant turbulent du gaz de balayage formé, à partir de l'écoulement laminaire du gaz de balayage, en aval du corps de modification de l'écoulement (3, 8).

3. Dispositif suivant la revendication 2, caractérisé en ce que le corps de modification de l'écoulement (3, 8) est de forme cylindrique et en ce que le corps de modification de l'écoulement (3, 8) possède à l'avant, dans le sens de l'écoulement, une forme d'attaque (31, 81) aérodynamique.

4. Dispositif suivant les revendications 2 et 3, caractérisé en ce que le diamètre du corps de modification de l'écoulement (3) est légèrement plus petit que le diamètre intérieur du tuyau (1), de manière à laisser subsister une fente annulaire ouverte (4), et en ce que le corps de modification de l'écoulement (3) comporte en arrière, dans le sens de l'écoulement, un bord de décollement (32).

5. Dispositif suivant la revendication 4, caractérisé en ce que des tôles déflectrices (5) sont disposées à l'extrémité arrière, dans le sens de l'écoulement, du corps de modification de l'écoulement (3) sur sa surface latérale.

6. Dispositif suivant la revendication 5, caractérisé en ce que les tôles déflectrices (5) sont disposées parallèlement à l'axe du tuyau.

7. Dispositif suivant la revendication 5, caractérisé en ce que les tôles déflectrices (5) sont inclinées d'un certain angle par rapport à l'axe du tuyau.

8. Dispositif suivant la revendication 4, caractérisé en ce que sur le pourtour du corps de modification de l'écoulement (3) sont disposés des galets (6) qui soutiennent le corps de modification de l'écoulement (3) de manière qu'il puisse se déplacer sur la surface intérieure du tuyau.

9. Dispositif suivant la revendication 8, caractérisé en ce qu'un jeu de galets est monté élastiquement.

10. Dispositif suivant les revendications 2 et 3, caractérisé en ce que le diamètre du corps de modification de l'écoulement correspond au diamètre intérieur du tuyau (7) et en ce que sur la surface cylindrique du corps de modification de l'écoulement (8) se trouve, pour conduire le gaz de balayage, une gorge (9) de la forme d'un filetage de vis.

11. Dispositif suivant la revendication 10, caractérisé en ce que la gorge (9) a une section transversale trapézoïdale.

12. Dispositif suivant la revendication 10, caractérisé en ce que sur la surface latérale cylindrique du corps de modification de l'écoulement (8) sont disposées des pièces en fer (11), qui interagissent avec des aimants de maintien (12) pouvant être montés a l'extérieur du tuyau (7).

13. Dispositif suivant la revendication 12, caractérisé en ce que les pièces en fer (11) sont noyées au niveau de la surface du corps de modification de l'écoulement (8).

14. Dispositif suivant la revendication 2, caractérisé en ce que le corps de modification de l'écoulement (3, 8) est en matière plastique.

EP 0 223 059 B1

FIG 1

FIG 2